# EUROPEAN PATENT APPLICATION

(11) **EP 2 072 480 A1**
(43) Date of publication of application: **24.06.2009**
(21) Application number: 07024929.7
(22) Date of filing: 21.12.2007
(51) Int. Cl.: C04B 28/02, C04B 18/02, C04B 33/13

(54) **Method of treating mineral wool**

(71) Applicant: Rockwool International A/S, 2640 Hedehusene (DK)
(72) Inventor: The designation of the inventor has not yet been filed
(74) Representative: Samuels, Lucy Alice

(57) **Abstract**

The present invention relates to a method of producing a granular product, the method comprising
providing base material in particulate form such that at least 80% by weight of the base material is in the form of particles having size not more than 20 mm and comprises mineral wool, and has water content not more than 50 wt% based on the particulate base material,
mixing the particulate base material with a binder material to form a base-binder mixture,
forming the base-binder mixture into granules, wherein at least 80% by weight of the granules have size not more than 40 mm,
and drying the granules to form a granular product.

## Description

This invention relates to methods of producing products from mineral wool substrates, especially waste mineral wool substrates, and to the product of these methods and to novel products which can be produced by these and other methods. It also relates to uses of the products of the method and the novel products.

Mineral wool is used in numerous applications in various forms, for instance for sound insulation, heat insulation, fire protection, construction applications and as a horticultural growth substrate.

Once the product is no longer required, there is a need to dispose of it in an appropriate manner. This is potentially problematic in the case of mineral wool which has been used in a variety of applications, and in particular in the case of mineral wool which has been used as a horticultural growth substrate. This material eventually comes to the end of its useful life and must be disposed of. It is desired to reuse the product in some way rather than, say, sending it to landfill. However, this is not straightforward, because this has within it high levels of water including nutrients and other components used by the growers such as trace elements, (often above 10% by weight of the substrate) and contains organic plant material and is usually surrounded by other, often organic, material, such as polymeric film.

At present a common method of disposing of this material is by using it for the fabrication of bricks, after separating the polymeric packaging from the mineral wool growth substrate and pre-treating the waste growth substrate.

However, it is desirable to find alternative methods of recycling mineral wool substrates, especially methods which are suitable for use with water-containing substrates such as those which have been used for horticulture.

There is also a constant desire for new mineral-based products for use in the horticultural industry and in the construction and other industries. It would therefore be desirable to be able to provide a method which not only allows recycling of waste mineral wool substrates but which results in a product which has a variety of uses in several fields, segments and markets.

According to the invention we provide a method of producing a granular product, the method comprising
providing a base material in particulate form such that at least 80% by weight of the base material is in the form of particles having size not more than 20mm, and comprises mineral wool, and has water content not more than 50 wt % based on the particulate base material,
mixing the particulate base material with a binder material to form a base binder mixture,
forming the base binder mixture into granules,
and drying the granules, wherein at least 80% by weight of the product is in the form of granules having size not more than 40 mm.

As well as drying in the last step, the granules can optionally be baked.

We find that this method provides a number of benefits.

Firstly, it is a convenient way to recycle waste mineral wool substrate and is applicable even to difficult substrates such as those which have been used in horticulture and hence are wet and combined with organic material.

Furthermore, it results in a product having beneficial product properties and hence is useful even when the starting material is not a waste product (although this has economic and environmental advantages).

Other methods of treating waste mineral material are known. For instance JP 10279936 discloses a method for recycling building waste including concrete, rock wool, timber chips, etc. This method comprises (a) recovering the waste, (b) sorting the waste, (c) pulverising and mixing the waste, (d) adjusting the pulverised material to a desired size, (e) adding binder, which is cement milk in the case of concrete or rock wool and mixing the blend, (f) press moulding the moulding material formed from the blend. US 2006/0042514 discloses a method for converting very fine perlite material into a relatively dust-free product, by mixing the waste perlite dust with binder and agglomerating the blend.

In the method of the invention the starting material comprises mineral wool and is in particulate form. This base material can be provided from any appropriate source but is preferably waste mineral wool which has previously been used in one of the known applications for mineral wool and has reached the end of its useful life. The waste mineral wool may itself be in the form of particles but generally it is received in the form of a coherent substrate product such as a slab, block, or mat often having minimum dimensions at least 50 mm, often at least 100 mm, such that this waste mineral wool is required to be reduced to particulate form before use in the method of the invention.

Waste mineral wool can have been used in any of the known applications for mineral wool, such as sound insulation, heat insulation, fire protection and construction. Preferably it is waste horticultural growth substrate, especially greenhouse waste mineral wool substrates including plastic film and roots and plants and nutrients.

The invention is particularly useful for treatment of waste mineral wool substrates which have a content of water, for instance at least 10% water (by weight based on weight of the waste mineral wool). The level of water is preferably at least 40 or 50 or even at least 60%.

By water we mean a liquid that can be pure water but is preferably a solution of water with components that are commonly used in horticulture, such as nutrients or pesticides.

Horticultural growth substrates are normally provided such that when they reach the end of their useful life they have water content within these ranges.

The invention is also particularly useful for treating waste mineral wool which is intimately combined with organic material. In the case of horticultural growth substrates, this can be plant material incorporated within the mineral wool itself. It may also be polymeric packaging material around the waste slab product.

The waste mineral wool can be subjected to a separation step which separates at least part of the organic material from the mineral wool. This can be done for instance by shredding, milling, or grinding, wind sieving or rotation or flotation.

In the invention it is essential that a base material is provided in particulate form such that at least 80% by weight of the mineral wool substrate is in the form of particles having size not more than 20 mm. The "size" is the maximum dimension and this can be determined by known methods including sieving.

The base material comprises mineral wool but may also comprise other material, usually in dry form. Other materials include coco growth substrate, sawdust, perlite and pumice. Preferably at least 30%, more preferably at least 40% and in particular at least 50%, especially at least 70%, of the base material is mineral wool, based on solid material.

If, as is preferred, the mineral wool substrate is provided as a waste product which is of large size, such as a slab, then this must be subjected to size reduction to provide it in particulate form. Suitable methods include shredding, grinding and milling.

It is also possible to provide the particulate base material by first subjecting a mineral wool substrate provided in large size form to shredding. This can in itself result in some loss of water from the substrate, if water is initially present. Preferably this step results in a shredded product which has a content of water of not more than 50 wt%, more preferably not more than 30 wt%, especially not more than 15 wt% and in particular not more than 10 wt%.

This coarsely shredded material can then be subjected to a second, fine grinding stage. We find that including this fine grinding stage results in granules of improved quality. Preferably the fine grinding stage results in a particulate base material in which at least 80 wt% of the material has size not more than 20 mm, preferably not more than 15 mm and preferably not more than 10 mm.

Preferably water content of the material subjected to the fine grinding stage is not more than 20 %, especially not more than 15% and in particular not more than 10%. If the level of water is too high then the consistency of the base material after fine grinding is inappropriate.

The base material may also comprise granular products of the process of the invention recycled into the process itself.

In the invention it is preferred that prior to mixing the particulate base material with binder material the base material has a water content not more than 20%, preferably not more than 15%, especially not more than 10%. If the mineral wool substrate is provided in a form such that it already has appropriately low water content, then no treatment is required. If it is provided in a form which has higher water content, then it is generally subjected to a treatment which reduces the water content. For instance, it can be subjected to pressing, drying or centrifuging.

If reduction of water content is included in the process this is normally done after any necessary size reduction to the particulate form but it can be done before size reduction.

In the invention the particulate base material is mixed with a binder material to form a base-binder mixture. The binder is preferably inorganic, most preferably clay but can also for instance be cement or lime or gypsum. It can be organic, eg. starch. The most preferred clay is bentonite clay, which gives particularly good wet and dry strength to the final granules.

The amount of binder is preferably in the range 1 to 25 weight % based on the total weight of base material and binder. More preferably it is 1 to 10 wt %, most preferably 3 to 7 wt%.

The content of water in the base material is preferably not more than the level given above, because we find that if the level of water is too high then the requirement for binder is increased.

The base-binder mixture preferably contains only particulate mineral wool and binder material, as normally no other components are needed, but it can also contain plastic film and plant remnants.

The particulate base material and binder material are mixed. Blending times are preferably in the range of 1 to 10 minutes.

The base material and binder can be mixed in the as-received form. Alternatively, especially if the binder is clay such as bentonite (or some other solid particulate binder), the binder can be made into a slurry with water and the slurry mixed with the base material.

The mixture containing base material and binder is then formed into granules. This can be done by any known method for forming granules.

The granules, before the drying step, generally have strength of at least 0.5 N/mm², preferably at least on 1 N/m², measured according to nen-en1097.

The final granules have size at least 80 weight % not more than 40 mm, preferably not more than 30 mm.

The granules formed by the mixing of the base material and binder and subsequent granulation are dried. This can be at ambient temperature but preferably the granules are baked (i.e. heated). Appropriate drying temperatures are in the range 650 to 1100°C, preferably 800 to 1000°C.

It is preferred that drying (and baking) is carried out under heat in a rotary kiln, but could also be done in a static oven, fluid bed or any other suitable equipment.

If organic material such as plastic film and plant remnant, or sawdust, is included in the base material, this is burnt off during the drying stage. This can result in an energy reduction or can result in energy which is recycled to an earlier drying step.

According to the invention this method results in a final product which has surprisingly good porosity and absorbency properties which make it appropriate for use in a variety of applications.

For instance, it can be used as a growth substrate, in particular in industrial horticulture for pot plants or for hobby gardening or roofgardens or potplants or growth container systems or as plant decoration material or as in house gardens or filter material.

It is also useful in applications where absorbency of fluid is required, for instance as cat litter or as floor coverings where the floor is likely to encounter fluid leakages, as a drainage layer or backfill in certain building applications.

The product is light and is of low density but has high strength and therefore can be used in construction applications such as road construction and as a replacement for gravel in the production of concrete. It can also be used in applications known for the use of perlite, or pumice or diatomite or tufa or scoria.

Granular products having granular size at least 80% in the range 4 to 40mm, preferably 4 to 16mm, preferably 8 to 16mm, or 4 to 8mm can be used in horticulture. Materials having granular size at least 80% in the range 4 to 8 mm, or 4 to 16 mm can be used as drainage layers.

According to the invention it is possible to produce using this method a novel product, which can also be produced by other methods. This novel product is a product in the form of pellets of size at least 80% not more than 40 mm, wherein the pellets have a content of mineral wool of from 50 to 99% and a concentration of clay binder of from 1 to 15%, a density of pellets from 650 to 850 kg/m³, a strength of from 1 to 5 N/mm² and a water absorption capacity of from 35 to 55%.

Water absorption capacity is measured according to nen-en1097-10.

The product preferably has porosity in the range 35 to 55 % (v/v). Porosity is determined according to nen-iso 15901-1/31.

### Example

In a preferred process, waste horticultural growth substrate is subject to coarse grinding and then to a first drying step. After this step it is subjected to a further fine grinding step. It is then mixed with bentonite clay as the binder and this mixture is subjected to pelletisation. The granules resulting from pelletisation are baked. Some of the baked granules are recycled to the first drying stage and the remainder are sent for screening to select the desired particle size materials. This results in the granular product.

## Claims

1. A method of producing a granular product, the method comprising
providing base material in particulate form such that at least 80% by weight of the base material is in the form of particles having size not more than 20 mm and comprises mineral wool, and has water content not more than 50 wt% based on the particulate base material,
mixing the particulate base material with a binder material to form a base-binder mixture,
forming the base-binder mixture into granules, wherein at least 80% by weight of the granules have size not more than 40 mm,
and drying the granules to form a granular product.

2. A method according to claim 1 in which the particulate base material is provided by providing mineral wool in coherent form having minimum dimension at least 50 mm and reducing the coherent mineral wool to particulate form.

3. A method according to claim 1 or claim 2 in which the particulate base material is provided from a mixture comprising mineral wool and organic material, and at least some of the organic material is separated from the mineral wool prior to mixing the particulate base material with binder material.

4. A method according to any preceding claim in which the base material in particulate form is produced from waste mineral wool product having a content of at least 10% water, by weight of the waste product.

5. A method according to claim 4 in which the waste mineral wool product is waste horticultural growth substrate.

6. A method according to claim 4 or claim 5 in which the waste mineral wool substrate is treated to reduce the water content to not more than 20% prior to mixing the particulate mineral wool substrate with binder material.

7. A method according to claim 6 in which the treatment to reduce water content is by pressing the particulate base material.

8. A method according to any preceding claim in which the binder material is an inorganic binder.

9. A method according to any preceding claim in which the binder comprises clay.

10. A method according to any preceding claim in which the binder comprises bentonite clay.

11. A method according to any preceding claim in which the amount of binder in the base-binder mixture is from 1 to 10% by weight based on the total base-binder mixture.

12. A method according to any preceding claim in which the base-binder mixture is formed into the granules by a granulation method.

13. A method according to any preceding claim in which drying of the granules is carried out by heating.

14. A method according to claim 13 in which heating is at a temperature from 700 to 100°C.

15. A product obtainable by the method of any of claims 1 to 14.

16. A product in the form of pellets of size at least 80% not more than 40 mm, wherein the pellets have a content of mineral wool of from 50 to 99% and a concentration of clay binder of from 1 to 15%, a density of pellets from 650 to 850 kg/m³, a strength of from 1 to 5 N/mm² and a water absorption capacity of from 35 to 55%.

17. Use of a product according to any of claims 1 to 16 as a horticultural growth substrate.

18. Use of a product produced by the method of any of claims 1 to 14 or a product according to claim 15 or claim 16 for absorbing fluids.

19. Use of a product produced by the method according to any of claims 1 to 14 or a product according to claim 15 or claim 16 in construction.
